# EUROPEAN PATENT APPLICATION

(11) **EP 1 014 657 A1**
(43) Date of publication of application: **28.06.2000**
(21) Application number: 99309983.7
(22) Date of filing: 10.12.1999
(51) Int. Cl.: H04M 1/76, H04B 3/04

(54) **Loop telephone line assembly and methods**

(30) Priority: 23.12.1998 US 220174
(71) Applicant: LUCENT TECHNOLOGIES INC., Murray Hill, New Jersey 07974-0636 (US)
(72) Inventor: Posthuma, Carl Robert, Wheaton, Illinois 60187 (US)
(74) Representative: Buckley, Christopher Simon Thirsk

(57) **Abstract**

A long loop telephone line assembly enables a plain old twisted pair long loop to support both regular telephone voice communications as well as digital subscriber service by providing the loop without any load coils generally used to provide a uniform response for voice communications in order to extend the frequency response of the loop to a range adequate for digital subscriber service and then compensating for the nonuniformity of the line frequency response by transmitting the voice communication signals through a pre-emphasis filter that has a complementary, mirror image frequency response to produce a resultant, composite, substantially uniform frequency response for the transmitted communication signals when received by the telephone at the other end of the line.

## Description

### Background Of The Invention

This invention generally relates to telecommunications and loop telephone line assemblies, and, more particularly, to providing digital subscriber line service, or DSL service, and plain old telephone service, or POTS, over the same long loops.

It is known how to provide both POTS and DSL service, such as asymmetric DSL, or ADSL, and ADSL-lite (simpler, lower complexity, lower speed, splitterless, longer reach) over the same twisted-pair telephone line in the case of short loops having a length less than eighteen thousand feet, or 18-kft. However, such dual service has not been provided to customer lines over long and very long loops that are longer than 18-kft. This is due to the presence of load coils and loop capacitance on such long and very long lines that cause the frequency response of the long loop falling off to zero at a cutoff frequency of approximately 3.2-kHz. The frequency response is maintained at a substantially uniform level needed for good voice transmission for regular telephone service on the subscriber line, but the relatively low cutoff frequency precludes use of the such long loop subscriber lines for digital subscriber line service.

### Summary Of The Invention

In accordance with the present invention long and very long loop telephone hybrid lines are provided that are capable of handling both good POTS as well as DSL service.

This is accomplished in the preferred embodiment by providing such long loop lines without the load coils customarily provided for purposes of obtaining a good uniform frequency response for voice transmission to enable an adequate frequency response beyond 3.2kHz needed for providing digital line service and then compensating for the declining frequency response that results from the lack of load coils, through the use of pre-emphasis filters which have a frequency response that is a substantial mirror image of that of the unloaded long loop line, to produce a substantially uniform frequency response up to and beyond the 3.2kHz range for normal voice telephone service.

### Brief Description Of The Drawings

The foregoing advantageous features of the present invention will be described in detail and other advantageous features will be made apparent from the detailed description of the preferred embodiment of the invention that is given with reference to the figures of the drawing, in which:
Fig. 1 is a functional block diagram of the preferred embodiment of the POTS/DSL hybrid line; and
Fig.2 is a plot of the frequency responses of the pre-emphasis filters, the long loop line without load coils and the resultant substantially uniform frequency response.

### Detailed Description

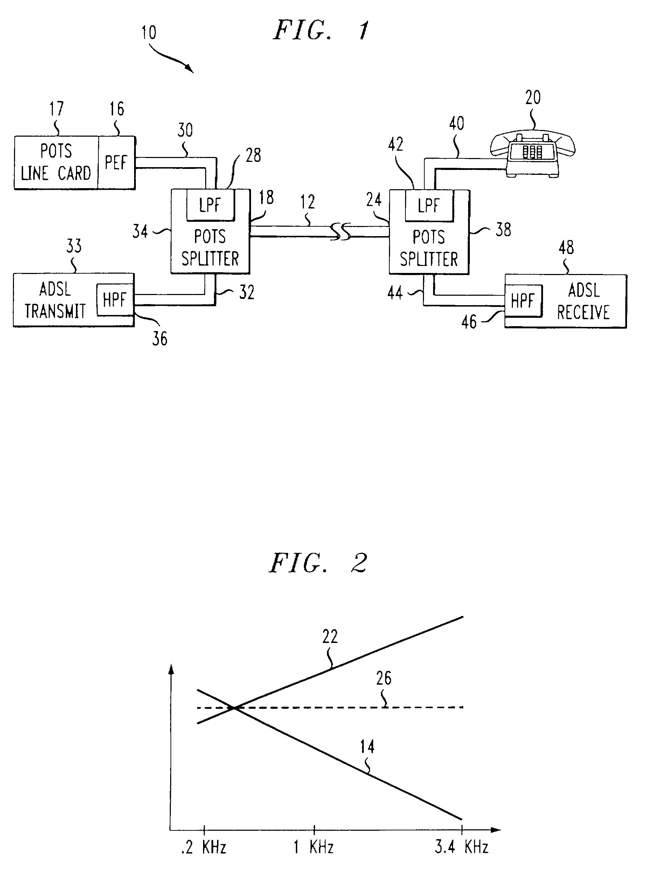

Referring to Fig. 1, an embodiment of the loop telephone line assembly 10 of the present invention has a very long loop telephone line 12 that, unlike conventional long and very long loops, lacks any load coils that are generally included to interact with the distributive capacitance of the twisted pair of wires that compose the long loop. Reference should be made to Bell Labs Blue Book "Transmission System for Communications", Bell Laboratories, 1982, the disclosure of which is hereby incorporated by reference, for further details relating to the use of load coils for purposes of obtaining a substantially uniform response needed for good voice communications. As will be explained in further detail, in accordance with the present invention an alternative to the use of load coils is provided to obtain a substantially uniform frequency response for voice communications without reducing the range of the response of the line beneath that needed for carrying digital subscriber line service signals that are of a higher frequency range than the voice signals. Generally, long loops and very long loops in excess of 18,000 feet equipped with load coils have a substantially uniform frequency response between 0.2kHz and 3.0kHz but the response cuts off at approximately 3.2kHz to virtually zero. Because digital subscriber line service, such as asymmetric digital subscriber line service, requires a frequency range up to 1.1MHz and in excess of 3.2kHz cutoff frequency, it has not been possible to provide such DSL service to subscribers on long and very long loops.

However, in accordance with the present invention, the twisted pair is not provided with any load coils which enables DSL service. This results in a POTS frequency response 14 shown in Fig.2 that gradually, substantially degrades between .2kHz and 3.4kHz, but still has sufficient response throughout the extended range to enable DSL service communication on the line 12 even when the line 12 is as long as 24,000 feet or more. The degradation does not adversely affect the digital communications but is not tolerable for good telephonic voice communications that requires a substantially uniform response.

Advantageously, the loop telephone line assembly 10 overcomes this degrading response problem for voice communications while allowing the loop to retain the needed range of frequency response to support DSL service. This is achieved by compensating for the non-uniform frequency response of the loop with respect to only the voice communication signals. Preferably, this compensation employs the use of pre-emphasis filters, or PEF, 16 at the POTS line interface circuit card, or POTS line card, 17 connected to one end 18 of the loop 12 at the multiport telephonic switch (not shown) from which voice communication signals originate. The voice communication signals processed by the POTS line card pass through and are operated upon by the pre-emphasis filters 16. The pre-emphasis filters 16 have a complementary non-uniform frequency response 22 that is substantially the mirror image of the frequency response 14 of the long loop 12. This complementary frequency response causes the voice communication signals to be transmitted with a complementary frequency variable emphasis, or relative amplification frequency response, to the telephone 20 at the other end 24 of the loop 12.

Generally, as shown in Fig. 2, the complementary frequency response 22 is upgrading with signals of increasing frequency being increasingly emphasized. On the other hand, the line frequency response 14 is degrading with signals of increasing frequency being increasingly attenuated, or de-emphasized. Consequently, the composite or resultant frequency response 26, shown in broken line in Fig.2, is substantially uniform, or flat, as shown in the entire voice communication range of.2kHz-3.2kHz and beyond past 3.4kHz.

An alternate solution includes the PEF at another location in the network such as an echo canceller services unit internal or external to the switch.

Thus, the line assembly 10 is capable of supporting both DSL service as well as regular voice communications even when the line 12 extends as long as 24,000 feet. In the preferred embodiment, the one end 18 of the loop 12 is connected to a POTS frequency splitter which has two output pairs 30 and 32 respectively coupled to the PEF 16 POTS line card 17 and an asymmetric DSL, or ADSL 33 or the like. The one output pair 30 passes through a low pass filter, or LPF, 34 and receives only relatively low frequency signals to isolate the POTS line card from the signals generated by the ADSL 33. The other output pair carries the entire frequency spectrum including the relatively high frequencies blocked by the LPF 34. The ADSL 33 has a high pass filter, or HPF, 36 which blocks the low frequency signals on the output pair 32 from the ADSL transmitter 33.

At the other end 24 of the line 12 another POTS frequency splitter 38 has one output pair 40 connected to a telephone through a low pass filter, or LPF, 42, structured and functioning substantially the same as the frequency splitter 28 and the associated low pass filter 34, respectively. Likewise, another output pair 44 of the splitter 38 is connected to a high pass filter, or HPF 46 of an ADSL receiving translator 48.

In accordance with the preferred method of the invention both digital subscriber line service and regular voice telephone service is provided on a long plain old twisted pair loop in excess of 18,000 feet and as long as 24,000 feet or longer by first assembling the loop without customary load coils connected in the loop to provide the long loop with a non-uniform frequency response that extends through a range including all the frequencies needed for both regular voice telephone communication and digital subscriber line service. This step of assembling is performed during initial installation of the loop. Alternatively, the assembling is accomplished by removing the existing load coils from long loops that already have them. Once this is accomplished, then the loop is enabled to support DSL service which is capable of functioning with a non-uniform frequency response. Then the step of compensating for the non-uniform frequency response with respect to voice communication signals is performed to enable good voice communications on the same loop. Because the transmitting voice communication signals are transmitted with a complementary non-uniform frequency response that is a substantial mirror image of the non-uniform frequency response of the plain old twisted pair loop 12 to produce a resultant, composite, substantially uniform frequency response for the transmitted voice communication signals being received good voice communication is obtained even though the loop 12, itself, lacks a non-uniform frequency response.

Generally, these same steps are performed to obtain good uniform frequency response from a long loop for voice communications without the cost in time and materials needed for the installation of multiple load coils regardless of whether the loop is also used to support DSL service. Thus, generally the invention contemplates a method of providing a long plain old twisted pair loop with a substantially uniform response for regular voice communications by first assembling the loop without customary load coils connected in the loop to provide the long loop with a non-uniform frequency response that extends through a range including all the frequencies needed for regular voice telephone communication, and then compensating for the non-uniform frequency response with respect to voice communication signals by transmitting voice communication signals with a complementary non-uniform frequency response that is a substantial mirror image of the non-uniform frequency response of the plain old twisted pair loop to produce a resultant, composite, substantially uniform frequency response for the transmitted voice communication signals when received.

Importantly, while the invention may obtain maximum advantage when used in conjunction with very long loops in which the cutoff frequency of the loop is below that needed for DSL service, the use of voice communication provides a general way of providing a uniform response in a loop of any length without the need for load coils. Advantageously, the range of uniform response for voice signals is extended beyond the 3.2kHz of long load with line coils.

Preferably, compensation is achieved through use of pre-emphasis filters having a frequency response that is complementary to that of the loop itself. Alternatively, the compensation is achieved through use of an alternate solution that includes the PEF at another location in the network such as an echo canceller services unit internal or external to the switch.

While pre-emphasizing occurs from a central office to the customer premise equipment, echo cancellers are preferably used with the PEF to prevent oscillation. Alternatively, a two wire repeater type PEF is used. Further, it should be understood that post-emphasizing occurs at a line card in a direction from the customer premise equipment to the central office.

Those skilled in the art having the benefit of the present disclosure will appreciate that the present invention may take many forms and embodiments. Some embodiments have been presented and described so as to give an understanding of the invention. it is intended that these embodiments should be illustrative and not limiting of the present invention. Rather, it is intended that the invention cover all modifications, equivalents, and alternatives falling within the spirit and scope of the invention as defined by the appended claims.

## Claims

1. A loop telephone line assembly, comprising:
a plain old twisted pair loop with a non-uniform frequency response that extends through a range including all the frequencies needed for both regular voice telephone communication and digital subscriber line service; and
means for compensating for the non-uniform frequency response with respect to voice communication signals.

2. The loop telephone line assembly of claim 1 in which the range extends to at least 3.4kHz.

3. The loop telephone line assembly of claim 1 in which the compensating means compensates for the non-uniform frequency response substantially up to 3.2kHz.

4. The loop telephone line assembly of claim 1 in which the means for compensating for the non-uniform frequency response includes means for transmitting voice communication signals with a complementary non-uniform frequency response that is a substantial mirror image of the non-uniform frequency response of the plain old twisted pair loop to produce a resultant, composite, substantially uniform frequency response for the transmitted signals being received.

5. The loop telephone line assembly of claim 4 in which the compensating means includes a pre-emphasis filter.

6. The loop telephone line assembly of claim 5 in which the pre-emphasis filter is interfaced between a voice communication transmitter and the loop.

7. The loop telephone line assembly of claim 1 including a signal splitter at one of the opposite ends of the plain old twisted pair loop for splitting the signals between relatively only low frequencies and at least complementary only relatively high frequencies of the full frequency spectrum respectively provided on two output pairs.

8. The loop telephone line assembly of claim 7 including a low pass filter for passing the only relatively low frequency voice signals to one of the two output pairs.

9. The loop telephone line assembly of claim 8 including a digital subscriber line translation unit connected with another of the two output pairs.

10. The loop telephone line assembly of claim 9 in which the digital line translation unit has a high pass filter to block any low frequencies input signals appearing on the other of the output pairs.

11. The loop telephone line assembly of claim 8 including a line card connected to the one of two output pairs for interfacing voice communication between the one of the two output pairs and a telephonic switch.

12. The loop telephonic line assembly of claim 11 including a digital subscriber line transmitting translation unit connected to another of the two output pairs.

13. The loop telephonic line assembly of claim 8 including a telephone connected to the one of the two output pairs.

14. The loop telephonic line assembly of claim 13 including a digital subscriber line receiving translation unit.

15. The loop telephonic line assembly of claim 14 in which the receiving translation unit includes a high pass filter for blocking receipt of relatively low frequency signals passed by the low pass filter to the telephone.

16. The loop telephonic line assembly of claim 7 including another signal splitter at another one of the opposite ends of the old twisted pair loop for splitting the signals between relatively high and low frequencies.

17. The loop telephonic line assembly of claim 16 in which the other signal splitter has two output pairs and includes a low pass filter.

18. The loop telephonic line assembly of claim 1 including
a digital subscriber line transmission translation unit and the compensating means connected to one end of the loop, and
a digital subscriber line receiving translation unit and a telephone connected to another end of the loop opposite to the one end.

19. The loop telephone line assembly of claim 1 in which the length of the loop is greater than 18,000 feet.

20. The loop line assembly of claim 1 in which the nonuniform frequency response is substantially due to the lack of customary load coils connected in the loop otherwise used to obtain a uniform frequency response for the loop.

21. A method of enabling both digital subscriber line service and regular voice telephone service on a long plain old twisted pair loop, comprising the steps of:
assembling the loop without customary load coils connected in the loop to provide the long loop with a non-uniform frequency response that extends through a range including all the frequencies needed for both regular voice telephone communication and digital subscriber line service; and
compensating for the non-uniform frequency response with respect to voice communication signals only.

22. The method of claim 21 in which the range extends to at least 3.4kHz.

23. The method of claim 21 in which the compensating means compensates for the non-uniform frequency response substantially up to 3.2kHz.

24. The method of claim 21 in which the step of compensating for the non-uniform frequency response includes the step of transmitting voice communication signals with a complementary non-uniform frequency response that is a substantial mirror image of the non-uniform frequency response of the plain old twisted pair loop to produce a resultant, composite, substantially uniform frequency response for the transmitted voice communication signals being received.

25. The method of claim 24 in which the step of compensating includes the step of passing the transmitted voice communication signals through a pre-emphasis filter having the complementary frequency response.

26. A method of providing a long plain old twisted pair loop with a substantially uniform response for regular voice communications, comprising the steps of:
assembling the loop without customary load coils connected in the loop to provide the long loop with a non-uniform frequency response that extends through a range including all the frequencies needed for regular voice telephone communication; and
compensating for the non-uniform frequency response with respect to voice communication signals by transmitting voice communication signals with a complementary non-uniform frequency response that is a substantial mirror image of the non-uniform frequency response of the plain old twisted pair loop to produce a resultant, composite, substantially uniform frequency response for the transmitted voice communication signals being received.

27. The method of claim 26 in which the step of compensating includes the step of passing the transmitted voice communication signals through a pre-emphasis filter having the complementary frequency response.
